# EUROPEAN PATENT APPLICATION

(11) **EP 0 849 499 A1**
(43) Date of publication of application: **24.06.1998**
(21) Application number: 97122483.7
(22) Date of filing: 19.12.1997
(51) Int. Cl.: F16H 7/12

(54) **Tensioning device for belts, in particular toothed belts**

(30) Priority: 19.12.1996 IT TO960259 U
(71) Applicant: DAYCO EUROPE S.p.A., 64010 Colonnella (Teramo) (IT)
(72) Inventor: Rocca, Carlo, 10125 Torino (IT); Cascionale, Paolo, 65126 Pescara (IT)
(74) Representative: Jorio, Paolo

(57) **Abstract**

The tensioning device (1) comprises a support plate (2) attached to a pivot (3) defining a fixed axis (A); an intermediate tubular element (15) accommodating the pivot (3) and able to rotate about the fixed axis; a pulley (4) for a belt (5) and supported by the tubular element (15) via a bearing (26), surrounding the pivot (3) and able to rotate about an axis of rotation (B) which is not coincident with the fixed axis (A); and an elastic element (27) interposed between the pivot (3) and the intermediate tubular element (15) so as to urge elastically the intermediate tubular element against the belt. To ensure that the belt (5) is centered with respect to the pulley (4) and that the loads applied to the bearing (26) pass accurately through the centre of the balls (31) of the bearing, the pulley (4) is of convex form.

## Description

The present invention relates to a tensioning device for belts, in particular toothed belts for transmitting motion from the crankshaft to the camshaft of an internal-combustion engine.

It is known that a tensioning device is intended to ensure a substantially constant tension of a belt as the thermal and wear conditions vary. For this purpose, such a device comprises a pulley mounted to rotate eccentrically about a mounting pivot and loaded elastically in the direction of the belt.

In some tensioning devices, a mounting pivot of a pulley is made from steel and is secured by means of a bolt passing axially through the pivot itself and screwed into a fixed wall (for example, a wall of an engine block). In other devices the pivot, which is also of steel, is fitted into a portion projecting from a support plate which, in turn, is secured to the fixed wall in an eccentric position with respect to the pivot. In both cases, but especially in the second case in which the pivot is not coaxial to the securing screw, the danger arises that play and production tolerances will induce inaccurate positioning of the pivot and thus of the pulley which, therefore, is not able to apply forces accurately to the belt. Therefore, there is a danger of the belt being arranged in a position which is not centered on the pulley or which even loses contact therewith; furthermore, the load exerted by the belt on the tensioner is not accurately centered with respect to the bearing interposed between the pivot and the pulley, with the danger of premature damage to the tensioner.

The object of the present invention is to devise a belt tensioner which is not affected by the above-mentioned problem.

According to the present invention there is provided a tensioning device for a belt, in particular a toothed belt, comprising a pivot defining a first axis; an intermediate tubular element accommodating said pivot and able to rotate about said first axis; a pulley supported by said tubular element, surrounding said pivot and able to rotate about a second axis which is not coincident with said first axis; and an elastic element interposed between said pivot and said intermediate tubular element so as to urge elastically said intermediate tubular element against said belt, characterised in that said pulley is of convex form.

With a view to a better understanding of the present invention two preferred embodiments will now be described non-restrictively by way of example with reference to the accompanying drawings, in which:
Figure 1 shows a cross-section through a first embodiment of the tensioner, and
Figure 2 shows a cross-section through a second embodiment.

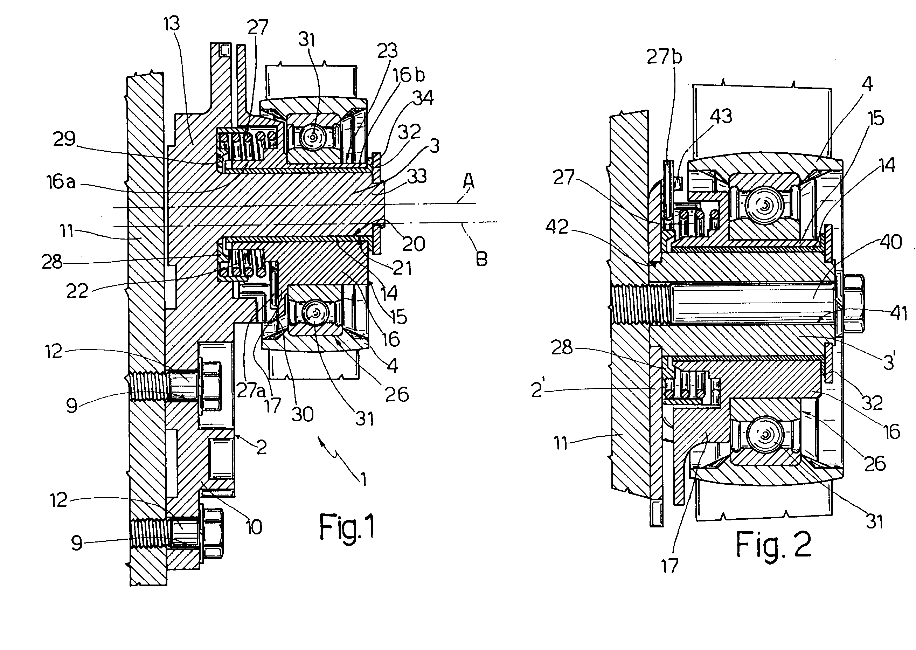

Referring to Figure 1, the tensioning device, generally designated 1, comprises an aluminium support plate 2, integrally with which is formed a mounting pivot 3 supporting eccentrically a pulley 4 for a toothed belt 5. The pulley 4 is of convex form.

In detail, the support plate 2 comprises a locating end 10 having holes 9 and fastened, by means of bolts 12 engaging in the holes 9, to a wall 11, for example of the engine block, and a projecting portion 13 extending in continuation of the fastening end 10 and supporting, in an integral manner, the pivot 3. A self-lubricating bush 14 is disposed around the pivot 3 and defines an axis A, said bush preferably being made of steel and having an internal coating of plastic material. The bush 14 has an inner surface 20 in contact with the an outer surface 21 of the pivot 3 and defining therewith a coupling with a predetermined coefficient of friction.

An intermediate element 15, which is preferably of aluminium and is rotatable about the axis A, is fitted around the bush 14. The intermediate element 15 comprises a tubular portion 16 and a flanged portion 17 extending radially outwards from an intermediate region of the tubular portion 16. The tubular portion 16 is formed by a first section 16a extending from the flanged portion 17 towards the projecting portion 13 and by a second section 16b of non-uniform thickness, extending from the flanged portion 17 in the opposite direction to the preceding one. The first section 16a of the tubular portion 16 has a cylindrical outer surface 22 which is coaxial to the bush 14; the second section 16b has a cylindrical outer surface 23 which is eccentric with respect to bush 14 and which defines an axis B parallel to the axis A.

The outer surface 23 of the second section 16b supports a pulley 4 with the interposition of a ball bearing 26 comprising a plurality of balls 31; therefore, the bearing 26 and the pulley 4 annularly surround the pivot 3 and are coaxial to the axis B and eccentric with respect to the axis A.

A helical spring 27, under torsional loading, is wound externally around the first section 16a of the tubular portion 16, bounded axially between the flanged portion 17 and a cap 28 accommodated in an annular recess 29 formed in the projecting portion 13 of the support plate 2 at the base of the pivot 3; additionally, the spring 27 has ends clamped against the flanged portion 17 and against the projecting portion 13, only one end being shown in the drawing, indicated at 27a, abutting against a transverse wall 30 of the flanged portion 17.

A metal washer 32 engages one end 33 of the pivot 3 and bears against an annular edge 34 of the bush 14, which edge is turned outwards; therefore, this end is upset so to lock the bush 14 axially and the intermediate element 15 in position.

In the embodiment of Figure 2, in which the elements common to the embodiment of Figure 1 are designated with the same reference numerals and will not be described again, the pivot 3' is no longer integral with the support plate and is smaller and thinner with respect to the plate 2 in Figure 1 which is therefore designated 2'; however it is made of steel and is secured to the plate 2' and to the fixed wall 11 by means of a bolt 40.

In detail, the pivot 3' has a through-hole 41 through which the bolt 40 passes, the threaded end of which is screwed into the wall 11; the plate 2' itself has an opening 42 in which one end, of reduced diameter, of the pivot 3' is introduced. Additionally, in Figure 2, the cap 28 is only applied against the plate 2' and the second end 27b of the spring 27 is visible, locked by a stop member 43 formed by the plate 2'. In Figure 2 the pulley 4 is of convex form.

The mode of operation of the tensioner described in Figures 1 and 2 is as follows. The spring 27 is preloaded so as to press the assembly formed by the intermediate element 15, the bearing 26 and the pulley 4 against the belt 5, so as to ensure a preset tensioning of said belt. Therefore, in a manner known per se, when the tension on the belt 5 undergoes variation, the force of the spring 27 induces a rotation of the assembly 15, 26, 4 about the bush 14 and the pivot 3 (or about the axis A), thus inducing displacement of the axis of rotation B of the pulley 5, as a result of the eccentricity of the outer surface 22 of the intermediate element 15, into a new position corresponding to a new condition of equilibrium between the force of the spring 27 and the resistance of the belt 5.

In a manner known per se and not described in detail, the friction present between the bush 14 and the pivot 3, at the surfaces 20, 21, ensures the damping of any oscillations derived from the pulsating force exerted by the belt 5 and, therefore, from the variation in the position of the axis B; the bearing 26 assures instead the free rotation of the pulley 4 about the axis B during the movement of the belt 5.

The advantages which can be achieved with the tensioning device described above are the following: The convex form of the pulley 4 ensures that the belt 5 is centered on the pulley 4 itself and, therefore, exerts an accurate force on the bush 14; additionally, it ensures that the loads applied to the bearing 26 by the belt 5, via the pulley 4, pass through the centre of the balls 31 and through the centre of the bush 14. Therefore, the tensioner has a high degree of reliability and durability, both in the case of axial fastening of the pivot (Figure 2) and in the case of a projected fastening (Figure 1).

Finally, it is evident that the tensioning device described and illustrated here can be subject to modifications and variations without thereby departing from the scope of protection of the present invention. In particular, the fact is emphasized that the parts can be of such dimensions that damping of the friction between the bush 14 and the intermediate element 15 is obtained, instead of or as well as between the facing surfaces 20, 21 of the bush 14 and the pivot 3.

## Claims

1. A tensioning device (1) for a belt (5), in particular a toothed belt, comprising a pivot (3; 3') defining a first axis (A); an intermediate tubular element (15) accommodating said pivot (3; 3') and able to rotate about said first axis; a pulley (4) supported by said tubular element (15), surrounding said pivot (3; 3') and able to rotate about a second axis (B) which is not coincident with said first axis (A); and an elastic element (27) interposed between said pivot and said intermediate tubular element (15) so as to urge elastically said intermediate tubular element (15) against said belt (5), characterised in that said pulley (4) is of convex form.

2. A device according to claim 1, characterised in that it comprises a support plate (2) supporting said pivot (3), said support plate and said pivot being formed integrally, and in that said support plate (2) has a fastening portion (10) having fastening means (9) and a projecting portion (13) extending from said fastening portion, said projecting portion (13) supporting said pivot (3) spaced apart from said fastening means (9).

3. A device according to claim 1, characterised in that said pivot (3') has a fastening end accommodated in an opening (42) of a support plate (2') and an axial hole (41) through which passes a fastening bolt (40) for fastening to a fixed wall (11).

4. A device according to any one of the preceding claims, characterized in that said intermediate tubular element (15) has a cylindrical outer surface (23) coaxial to said second axis (B), bearing means (26) being interposed between said outer surface (23) of said intermediate tubular element (15) and said pulley (4).

5. A device according to any one of the preceding claims, characterised in that by comprising a cylindrical bush (14) interposed between said pivot (3; 3') and said intermediate tubular element (15), said bush (14) having an inner surface (20) cooperating frictionally with an outer surface (21) of said pivot (3; 3') .
